# EUROPEAN PATENT APPLICATION

(11) **EP 2 911 062 A1**
(43) Date of publication of application: **26.08.2015**
(21) Application number: 13846714.7
(22) Date of filing: 26.09.2013
(51) Int. Cl.: G06F 12/08

(54) **METHOD AND DEVICE FOR ADJUSTING CACHE BLOCK LENGTH OF CACHE MEMORY**

(30) Priority: 18.10.2012 CN 201210396334
(71) Applicant: ZTE Corporation, Shenzhen, Guangdong 518057 (CN)
(72) Inventor: WAN, Zhijun, Shenzhen Guangdong 518057 (CN)
(74) Representative: Tischner, Oliver
(86) International application number: PCT/CN2013/084369
(87) International publication number: WO 2014/059869

(57) **Abstract**

Provided are a method and device for adjusting a cacheline length of a cache. The method includes that if the number of times of successive failure in accessing data or instruction(s) is larger than a first predetermined threshold, all cachelines in the cache are invalidated and eliminated, the cache is disabled, a length of all the cachelines is adjusted to a first predetermined length value smaller than a current length value and then the cache is enabled; and during data or instruction(s) access, if the number of times of successive hitting in the cache is larger than a second predetermined threshold and data and instruction(s) in all cachelines are accessed in sequence after linefill, all the cachelines in the cache are invalidated and eliminated, the cache is disabled, the length of all the cachelines is adjusted to a second predetermined length value greater than the current length value and then the cache is enabled.

## Description

### TECHNICAL FIELD

The disclosure relates to the technical field of computer techniques, and in particular to a method and device for adjusting a cacheline length of a cache.

### BACKGROUD

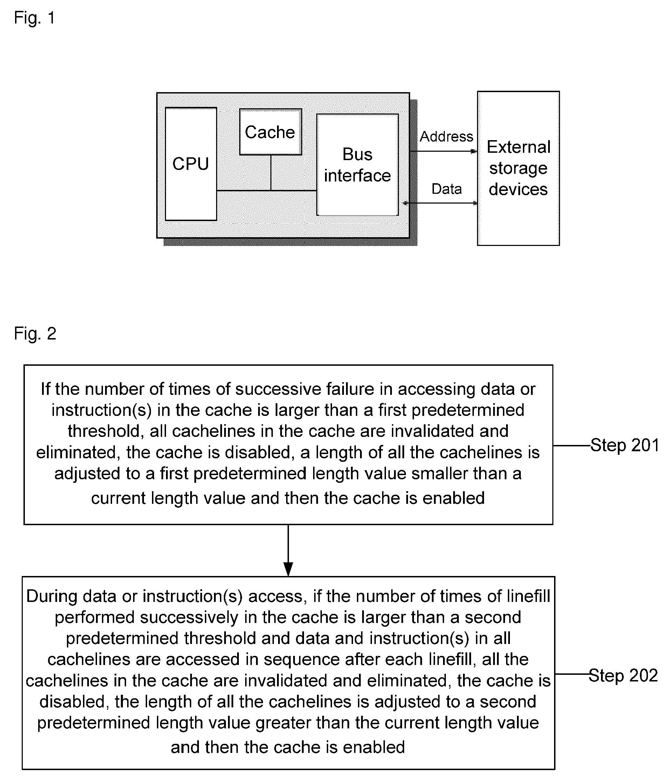

At present, in the conventional art, cache techniques are considered by features such as local continuity of a program and the access rate much higher than its lower level memory. Fig. 1 shows a schematic storage architecture in a system according to the prior art, as shown in Fig. 1, including a CPU, a cache and a bus interface through which peripherals transmit data and address information. For a system having a bitwidth of 32 bits, when a 4-byte instruction or a piece of data is accessed, content (instruction or data) including the address, which has a length of a cacheline, is put into a cacheline at one time, so as to ensure that the instruction and data can be directly fetched from the cache over a period of time so that the operation rate of the program is improved and runtime is shortened; however, in cases when local continuity of some programs is not high, each time an instruction is read, content (instruction or data) including the address, which has a length of a cacheline, is put into a cacheline at one time.

In cases when the cache has a fixed size, if the length of cachelines is relatively large, a large number of codes and data that will not be operated in a subsequent period of time may occupy spaces of the cache and increase the number of times of replacement, for example, in a format conversion or attribute collection algorithm for processing multiple high-volume audio/video files (e.g., 4-Gbyte video file which is divided into multiple segments with a size of 1 Kbytes per segment), only several bytes of data in the head or tail of respective segments of the audio/video file need to be acquired, and if the cache is enabled and the cacheline length is long, then cache replacement will occur frequently, which inevitably affects the efficiency of the algorithm, at the moment it is desired to shorten the length of cachelines as much as possible; on the contrary, in cases when a large number of instructions have strong continuity or a large amount of continuous data spaces are to be accessed, the performance of a cache having a relatively small cacheline length will be apparently reduced, for example, when a large number of high-volume audio/video files (e.g., 4-Gbyte high definition video files) are downloaded or uploaded, if 5-Gbyte audio/video data are accessed continuously, it is desired that more data can be put into a cacheline each time data not hit are accessed so that a fold increase in downloading/uploading rate of audio/video data can be resulted.

### SUMMARY

Embodiments of the disclosure provide a method and device for adjusting a cacheline length of a cache, so as to solve a problem in the prior art that the length of a cacheline of a cache cannot be altered and adjusted.

An embodiment of the disclosure provides a method for adjusting a cacheline length of a cache, which includes: if the number of times of successive failure in accessing data or instruction(s) in the cache is larger than a first predetermined threshold, then all cachelines in the cache are invalidated and eliminated, the cache is disabled, a length of all the cachelines is adjusted to a first predetermined length value smaller than a current length value and then the cache is enabled; and during data or instruction(s) access, if the number of times of linefill performed successively in the cache is larger than a second predetermined threshold and data and instruction(s) in all cachelines are accessed in sequence after each linefill, all the cachelines in the cache are invalidated and eliminated, the cache is disabled, a length of all the cachelines is adjusted to a second predetermined length value greater than a current length value and then the cache is enabled.

In an embodiment, the step that a length of all the cachelines is adjusted to a first predetermined length value smaller than a current length value may include: the length of all the cachelines is adjusted to the first predetermined length value smaller than the current length value automatically through hardware; or the length of all the cachelines is adjusted to the first predetermined length value smaller than the current length value through a register controlled by software.

In an embodiment, the step that a length of all the cachelines is adjusted to a second predetermined length value greater than the current length value may include: the length of all the cachelines is adjusted to the second predetermined length value greater than the current length value automatically through hardware; or the length of all the cachelines is adjusted to the second predetermined length value greater than the current length value through a register controlled by software.

In an embodiment, the cache may adopt a set-associative mapping relation and a replacement strategy including pseudo random and sequential replacement.

In an embodiment, the method may further include: if there are three write buffers provided with a maximum cacheline length, the three write buffers are used to support basic operations of the cache, wherein the three write buffers are respectively a victim write buffer, a clean linefill buffer and a store buffer, and the basic operations include invalidation, clean, clean invalidation, lockdown, enabling, disabling and replacement; and if the three write buffers are not provided with the maximum cacheline length, lower address spaces of the three write buffers are used to support basic operations of the cache, wherein the three write buffers i are respectively a victim write buffer, a clean linefill buffer and a store buffer, and the basic operations include invalidation, clean, clean invalidation, lockdown, enabling, disabling and replacement.

An embodiment of the disclosure further provides a device for adjusting a cacheline length of a cache, which includes: a first adjustment module configured to, if the number of times of successive failure in accessing data or instruction(s) in the cache is larger than a first predetermined threshold, invalidate and eliminate all cachelines in the cache, disable the cache, adjust a length of all the cachelines to a first predetermined length value smaller than current length values and then enable the cache; and a second adjustment module configured to, during data or instruction(s) access, if the number of times of linefill performed successively in the cache is larger than a second predetermined threshold and data and instruction(s) in all cachelines are accessed in sequence after each linefill, invalidate and eliminate all the cachelines in the cache, disable the cache, adjust the length of all the cachelines to a second predetermined length value greater than the current length value and then enable the cache.

In an embodiment, the first adjustment module may be configured to adjust the length of all the cachelines to the first predetermined length value smaller than a current length value automatically through hardware, or adjust the length of all the cachelines to the first predetermined length value smaller than a current length value through a register controlled by software.

In an embodiment, the second adjustment module may be configured to adjust the length of all the cachelines to the second predetermined length value greater than a current length value automatically through hardware, or adjust the length of all the cachelines to the second predetermined length value greater than a current length value through a register controlled by software.

In an embodiment, the cache may adopt a set-associative mapping relation and a replacement strategy including pseudo random and sequential replacement.

In an embodiment, the device may further include: a first processing module configured to, if there are three write buffers provided with a maximum cacheline length, use the three write buffers to support basic operations of the cache, wherein the three write buffers are respectively a victim write buffer, a clean linefill buffer and a store buffer, and the basic operations comprise invalidation, clean, clean invalidation, lockdown, enabling, disabling and replacement; and a second processing module configured to, if the three write buffers are not provided with the maximum cacheline length, use lower address spaces of the three write buffers to support basic operations of the cache, wherein the three write buffers are respectively a victim write buffer, a clean linefill buffer and a store buffer, and the basic operations comprise invalidation, clean, clean invalidation, lockdown, enabling, disabling and replacement.

Beneficial effects of embodiments of the disclosure are as follows:
a cacheline length can be changed at any time to adapt to different application scenarios, thus solving the problem in the prior art that the cacheline length of a cache cannot be altered and adjusted, and being capable of improving the access rate of system instructions or data and enhancing performance of the system.

### BRIEF DESCRIPTION OF THE DRAWINGS

Like reference numerals refer to like components throughout the accompanying drawings. In the drawings:
Fig. 1 shows a schematic storage architecture in a system according to the prior art;
Fig. 2 is a flowchart of a method for adjusting a cacheline length of a cache according to an embodiment of the disclosure;
Fig. 3 is a schematic structural diagram of a cache having 32-byte cachelines according to an embodiment of the disclosure;
Fig. 4 is a schematic structural diagram of a cache having 64-byte cachelines according to an embodiment of the disclosure; and
Fig. 5 is a schematic structural diagram of a device for adjusting a cacheline length of a cache according to an embodiment of the disclosure.

### DETAILED DESCRIPTION

In practical applications, in certain scenarios a cache is required to have a cacheline size of 8 bytes (in cases where programs have low local continuity, such as some attribute collection algorithms for audio/video files and format conversion processing algorithms for audios) while in some other scenarios the cache is required to have a cacheline size of 64 bytes or 128 bytes (in cases where programs have extremely high local continuity or a large amount of data desired to be accessed are stored in successive address spaces, such as upload or download of high definition audios/videos); furthermore, if a program has frequent jumps within a certain period of time, respective instructions resulting in a jump have virtual addresses far apart from each other and after each jump there are relatively few successive instructions, or a large amount of data needs to be accessed within a certain period of time but the data are far apart spatially, then it is desired that the number of instructions or the number of data entering a cacheline in each time is as small as possible, thus it is desired that the length of the cacheline can be very short; while in another case where a program is executed in sequence within a long period of time, or data within a large successive spaces are to be operated within a long period of time, it is desired that the number of instructions or the number of data entering a cacheline in each time is as large as possible. Therefore, the length of a cacheline of a cache needs to be adjusted according to application scenarios; in order to solve the problem in the prior art that the length of a cacheline of the cache cannot be altered and adjusted, the disclosure provides a method and device for adjusting a cacheline length of a cache, and the disclosure will be further elaborated below in combination with accompanying drawings and embodiments.

### Embodiments of the method

According to an embodiment of the disclosure, provided is a method for adjusting a cacheline length of a cache. Fig. 2 is a flowchart of a method for adjusting a cacheline length of a cache according to an embodiment of the disclosure, as shown in Fig. 2, the method for adjusting a cacheline length of a cache according to the embodiment of the disclosure includes the following processing from step 201 to step 202.

Step 201 includes that if the number of times of successive failure in accessing data or instruction(s) in the cache is larger than a first predetermined threshold, all cachelines in the cache are invalidated and eliminated, the cache is disabled, a length of all the cachelines is adjusted to a first predetermined length value smaller than a current length value and then the cache is enabled;
in step 201, the processing that a length of all the cachelines is adjusted to a first predetermined length value smaller than a current length value specifically includes:
way 1, the length of all the cachelines is adjusted to the first predetermined length value smaller than the current length value automatically through hardware; or
way 2, the length of all the cachelines is adjusted to the first predetermined length value smaller than the current length value through a register controlled by software.

It should be noted that in way 2 hardware is also required to be able to adjust the length of the cacheline, and the register is needed to preset adjustable cacheline length values, and then the software controls, through the register, selection of the length of the cacheline.

In both way 1 and way 2, a register can be used to set whether the above function is enabled or not.

Step 202 includes that during data or instruction(s) access, if the number of times of linefill performed successively in the cache is larger than a second predetermined threshold and data and instruction(s) in all cachelines are accessed in sequence after each linefill, all the cachelines in the cache are invalidated and eliminated, the cache is disabled, the length of all the cachelines is adjusted to a second predetermined length value greater than a current length value and then the cache is enabled.

In step 202, the processing that the length of all the cachelines is adjusted to a second predetermined length value greater than the current length value specifically includes:
way 1, the length of all the cachelines is adjusted to the second predetermined length value greater than the current length value automatically through hardware; or
way 2, the length of all the cachelines is adjusted to the second predetermined length value greater than the current length value through a register controlled by software.

It should be noted that in way 2 hardware is also required to be able to adjust the length of the cacheline, and the register is needed to preset adjustable cacheline length values, and then the software controls, through the register, selection of the length of the cacheline.

In both way 1 and way 2, a register can be used to set whether the above functionality is enabled or not.

It should be noted that in the embodiment according to the disclosure the cache adopts a set-associative mapping relation and a replacement strategy including pseudo random and sequential replacement.

In order to ensure basic operations of the cache, if there are three write buffers provided with a maximum cacheline length, then the three write buffers are used to support basic operations of the cache, wherein the three write buffers are respectively a victim write buffer, a clean linefill buffer and a store buffer, and the basic operations comprise invalidation, clean, clean invalidation, lockdown, enabling, disabling and replacement; and
if the three write buffers are not provided with the maximum cacheline length, then lower address spaces of the three write buffers are used to support basic operations of the cache, wherein the three write buffers are respectively a victim write buffer, a clean linefill buffer and a store buffer, and the basic operations comprise invalidation, clean, clean invalidation, lockdown, enabling, disabling and replacement.

The above technical solutions according to embodiments of the disclosure will be elaborated below with reference to the accompanying drawings.

An embodiment of the disclosure proposes a method for changing cacheline length depending on different cases, which includes five aspects as follows.
1. How to change a cacheline length, two methods are provided as follows:
   method 1 is that the length is changed automatically through hardware in the case when the failure in accessing data or instruction(s) has been hit for multiple times (for example 5 times), a current cacheline length will be changed automatically through the hardware to a smaller value; when data or instruction(s) are accessed, if it is found that during multiple times (for example 5 times) of linefill performed successively, data and instruction(s) in all cachelines are accessed in sequence after each linefill, the current cacheline length will be changed automatically through the hardware to a larger value, and a register is used to set whether this function is enabled or not; and
   method 2 is that the length of the cacheline is set by software through a register: in the case when accessing data or instruction(s) has been failed successively for multiple times(for example 5 times), a current cacheline length will be changed by the software through the register to a smaller value; when data or instruction(s) are accessed, if it is found that during multiple times (for example 5 times) of linefill performed successively, data and instruction(s) in all cachelines are accessed in sequence after each linefill, the current cacheline length will be changed by the software through the register to a larger value, and the register is used to set whether this function is enabled or not.

During changing of cacheline length by hardware or software, the structure of the cache for storing data or instruction(s) needs to be adjusted; when the cache accesses data, tag bits may change with its size being 32-n-7, the cacheline length is 2*ⁿ* bytes;

Example 1, Table 1 shows the structure of a cache having 32-byte cachelines, with n=5;

**Table 1**

| Virtual Address VA [12:5] | Cacheline Data TAG (20 bits) VA [31:12] | Data (64 bytes) | Cacheline Physical Address TAG PATAG (27 bits) PA [31:5] | Dirty ? | Invalid? |
|---|---|---|---|---|---|
| 0-31 | ....... | | | | |
| | | | | | |
| ....... | | | | | |
| | | | | | |

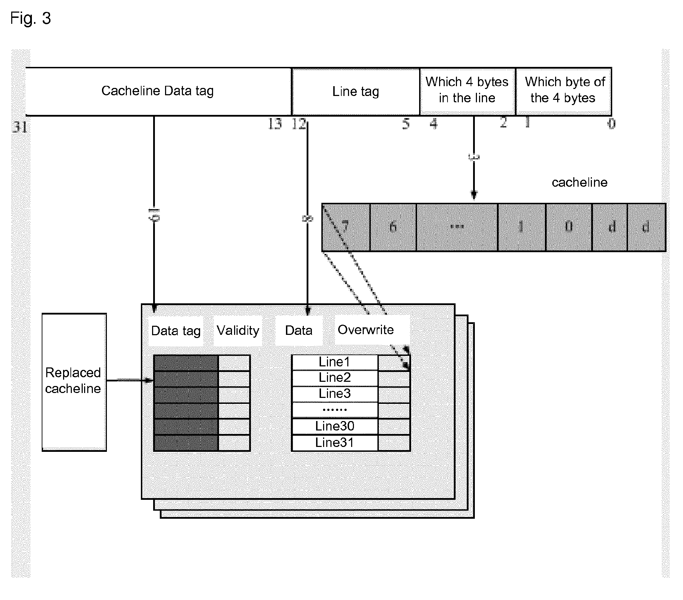

Fig. 3 is a schematic structural diagram of a cache having 32-byte cachelines according to an embodiment of the disclosure, as shown in Fig. 3, if the size of the cache is 32 kbytes, 32 sets are used; when the size of the cacheline is 32 byte, each set includes 32 cachelines, i.e., 32 ways; if the starting address is 0x0, then way 0 stores 0x00000000~0x000003ff, way 1 stores 0x00000400~0x7ff, ..., way 31 stores 0x7c00~0x7fff. Specifically, bit [31:13] represents a start address of a way where set is, bit [12:5] represents a specific cacheline, bit [4:2] represents an offset address of a word in the cacheline.

Example 2, Table 2 shows the structure of a cache having 64-byte cachelines, with n=6;

**Table 2**

| Virtual Address VA [12:6] | Cacheline Data TAG TAG (19 bits) VA [31:13] | Data (64 bytes) | Cacheline Physical Address TAG PATAG (26 bits) PA [31:6] | Dirty? | Invalid? |
|---|---|---|---|---|---|
| 0-63 | ....... | | | | |
| | | | | | |
| ... | | | | | |
| .... | | | | | |

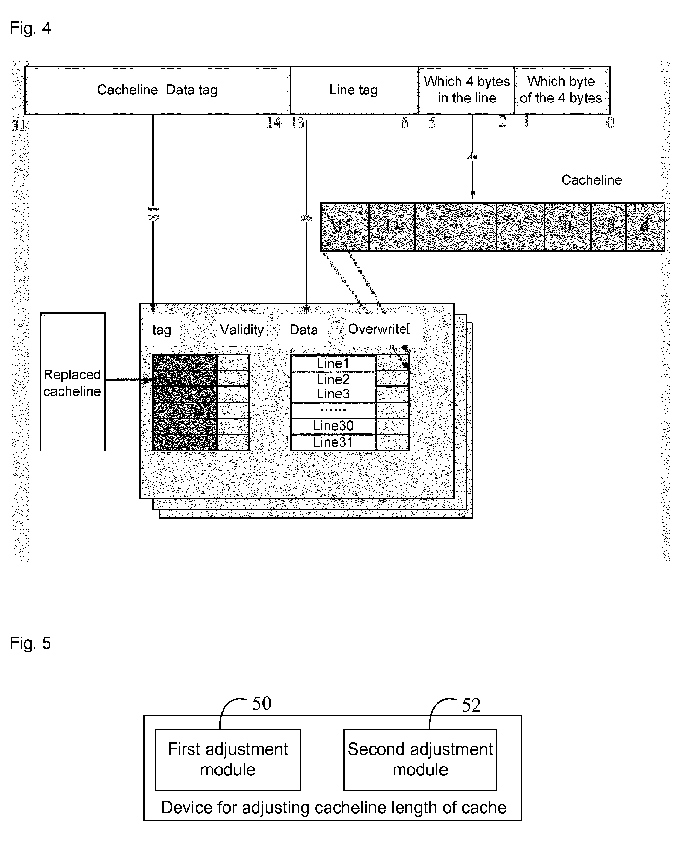

Fig. 4 is a schematic structural diagram of a cache having 64-byte cachelines according to an embodiment of the disclosure, the cache is designed in a set-associative way, as shown in Fig. 3, if the size of the cache is 32 kbytes, 32 sets are used; when the size of the cacheline is 64 bytes, each set includes 16 cachelines, i.e., 32 ways; if the starting address is 0x0, way 0 stores 0x00000000~0x000003ff, way 1 stores 0x00000400~0x7ff, ..., way 31 stores 0x7c00~0x7fff. Specifically, bit [31:14] represents a start address of Set t where set is, bit [15:6] represents a specific cacheline, bit [5:2] represents an offset address of a word in the cacheline.

Based on examples 1 and 2, the structure of a cache having other cacheline sizes can be obtained.
2. Operations to be done when a length value of a cacheline is to be changed by hardware includes that:
   Step 1, all cachelines are invalidated and eliminated;
   step 2, the cache is disabled;
   step 3, the length of the cacheline is changed;
   step 4, the cache is enabled.
3. All operations required to be supported under different cacheline lengths includes invalidation (inv), clean, clean invalidation (invclean), lockdown, enabling (enable), disabling(disable) and storage (eviction), and all the operations can be performed by taking a cacheline with a current length as a basic unit:
   1). in order to support these basic operations of the cache, there write buffers having a maximum cacheline length, which respectively are a victim write buffer, a cache linefill buffer and a store buffer; and
   2). when the three write buffers do not have a configurable maximum length, only their lower address spaces are used.
   4. The storage mapping relation used by the cache is that: the cache is designed in a set-associative way.
   5. The replacement strategy used by the cache includes: pseudo random and sequential replacement.

It should be noted that the cacheline length supportable by embodiments of the disclosure should be an integer multiple of a current data bitwidth (e.g., 32 bits) of the system and should not be larger than 256 bytes. With such a cache, cachelines with different lengths can be used according to the structure of a program and different data operations so as to improve rates of program execution and data access, to improve operation efficiency, to improve rate of communication between a CPU and peripherals, and to enhance performance of a whole SoC (System on Chip).

To sum up, in the embodiment of the disclosure, a cache having a variable cacheline length is introduced, and the cache has the following application scenarios: 1. in some audio/video file processing algorithms, for example when what desired to be accessed includes a large number of audio/video files and some special attribute values in respective segments thereof, the length of cachelines is set to a very small value; 2. during processing of network data packets, for example when what desired to be accessed includes a head and a tail of respective segments in a large number of network data packets and some special attribute values in respective segments, the length of cachelines is set to a very small value; 3. during data processing and data transmission in a USB, HDMI, PCI or SATA and some peripherals, a change in the length value of cachelines associated with a large amount of subsequent data transmission is determined according to attribute values of respective segments of previous data packets; 4. setting the cacheline length with a large value will improve greatly the rate and efficiency of the system during continuous transmission of a large number of high-volume audio/video files and high-volume network data packets. It can seen that a cache with such a structure has the following advantages: the length of cachelines can be determined through software or hardware, and the length of cachelines can be changed at any time to adapt to different application scenarios, thus improving access rate of system instruction(s) and data and enhancing performance of the system.

### Embodiments of the device

According to an embodiment of the disclosure, provided is a device for adjusting a cacheline length of a cache, Fig. 5 is a schematic structural diagram of a device for adjusting a cacheline length of a cache according to an embodiment of the disclosure, as shown in Fig. 5, the device for adjusting a cacheline length of a cache according to the embodiment of the disclosure includes a first adjustment module 50 and a second adjustment module 52, which will be further elaborated as follows.

The first adjustment module 50 is configured to, if the number of times of successive failure in accessing data or instruction(s) in the cache is larger than a first predetermined threshold, invalidate and eliminate all cachelines in the cache, disable the cache, adjust a length of all the cachelines to a first predetermined length value smaller than a current length value and then enable the cache;
the first adjustment module 50 is specifically configured to adjust the length of all the cachelines to the first predetermined length value smaller than the current length value automatically through hardware; or adjust the length of all the cachelines to the first predetermined length value smaller than the current length value through a register controlled by software.

It should be noted that in the hardware-based automatic adjustment way, hardware is also required to be able to adjust the length of the cacheline, and the register is needed to preset adjustable cacheline length values, and then the software controls, through the register, selection of the length of the cacheline. In the first adjustment module 50, a register can be used to set whether the above function is enabled or not.

The second adjustment module 52 is configured to, during data or instruction(s) access, if the number of times of linefill performed successively in the cache is larger than a second predetermined threshold and data and instruction(s) in all cachelines are accessed in sequence after each linefill, invalidate and eliminate all the cachelines in the cache, disable the cache, adjust the length of all the cachelines to a second predetermined length value greater than current length value and then enable the cache.

The second adjustment module 52 is specifically configured to adjust the length of all the cachelines to the second predetermined length value greater than the current length value automatically through hardware; or adjust the length of all the cachelines to the second predetermined length value greater than current length value through a register controlled by software.

It should be noted that in the hardware-based automatic adjustment way, hardware is also required to be able to adjust the length of the cacheline, and the register is needed to preset adjustable cacheline length values, and then the software controls, through the register, selection of the length of the cacheline. In the second adjustment module 52, a register can be used to set whether the above functionality is enabled or not.

Preferably, the cache may adopt a set-associative mapping relation and a replacement strategy including pseudo random and sequential replacement.

Furthermore, in order to ensure basic operations of the cache, the device may further include: a first processing module configured to, if there are three write buffers provided with a maximum cacheline length, use the three write buffers to support basic operations of the cache, wherein the three write buffers are respectively a victim write buffer, a clean linefill buffer and a store buffer, and the basic operations comprise invalidation, clean, clean invalidation, lockdown, enabling, disabling and replacement; and a second processing module configured to, if the three write buffers are not provided with the maximum cacheline length, use lower address spaces of the three write buffers to support basic operations of the cache, wherein the three write buffers are respectively a victim write buffer, a clean linefill buffer and a store buffer, and the basic operations comprise invalidation, clean, clean invalidation, lockdown, enabling, disabling and replacement.

The above technical solutions according to embodiments of the disclosure will be elaborated below with reference to the accompanying drawings.

An embodiment of the disclosure proposes a method for changing cacheline length depending on different cases, which includes five aspects as follows:
1. How to change a cacheline length, two methods are provided as follows:
   method 1 is that the length is changed automatically through hardware in the case when the failure in accessing data or instruction(s) has been hit for multiple times (for example 5 times), a current cacheline length will be changed automatically through the hardware to a smaller value; when data or instruction(s) are accessed, if it is found that during multiple times (for example 5 times) of linefill performed successively, data and instruction(s) in all cachelines are accessed in sequence after each linefill, the current cacheline length will be changed automatically through the hardware to a larger value, and a register is used to set whether this function is enabled or not; and
   method 2 is that the length of the cacheline is set by software through a register: in the case when accessing data or instruction(s) has been failed successively for multiple times(for example 5 times), a current cacheline length will be changed by the software through the register to a smaller value; when data or instruction(s) are accessed, if it is found that during multiple times (for example 5 times) of linefill performed successively, data and instruction(s) in all cachelines are accessed in sequence after each linefill, the current cacheline length will be changed by the software through the register to a larger value, and the register is used to set whether this function is enabled or not.

During changing of cacheline length by hardware or software, the structure of the cache for storing data or instruction(s) needs to be adjusted; when the cache accesses data, tag bits may change with its size being 32-n-7, the cacheline length is 2*ⁿ* bytes;

Example 1, Table 1 shows the structure of a cache having 32-byte cachelines, with n=5;

**Table 1**

| Virtu al Address VA [12:5] | Cacheline Data TAG (20 bits) VA [31:12] | Data (64 bytes) | Cacheline Physical Address TAG PATAG (27 bits) PA [31:5] | Dirty? | Invalid? |
|---|---|---|---|---|---|
| 0-31 | ....... | | | | |
| | | | | | |
| ....... | | | | | |
| | | | | | |

Fig. 3 is a schematic structural diagram of a cache having 32-byte cachelines according to an embodiment of the disclosure, as shown in Fig. 3, if the size of the cache is 32 kbytes, 32 sets are used; when the size of the cacheline is 32 byte, each set includes 32 cachelines, i.e., 32 ways; if the starting address is 0x0, then way 0 stores 0x00000000~0x000003ff, way 1 stores 0x00000400~0x7ff, ..., way 31 stores 0x7c00~0x7fff. Specifically, bit [31:13] represents a start address of a way where set is, bit [12:5] represents a specific cacheline, bit [4:2] represents an offset address of a word in the cacheline.

Example 2, Table 2 shows the structure of a cache having 64-byte cachelines, with n=6;

**Table 2**

| Virtual Address VA [12:6] | Cacheline Data TAG TAG (19 bits) VA [31:13] | Data (64 bytes) | Cacheline Physical Address TAG PATAG (26 bits) PA [31:6] | Dirty? | Invalid? |
|---|---|---|---|---|---|
| 0-63 | ....... | | | | |
| | | | | | |
| ... | | | | | |
| .... | | | | | |

Fig. 4 is a schematic structural diagram of a cache having 64-byte cachelines according to an embodiment of the disclosure, the cache is designed in a set-associative way, as shown in Fig. 3, if the size of the cache is 32 kbytes, 32 sets are used; when the size of the cacheline is 64 bytes, each set includes 16 cachelines, i.e., 32 ways; if the starting address is 0x0, way 0 stores 0x00000000~0x000003ff, way 1 stores 0x00000400~0x7ff, ..., way 31 stores 0x7c00~0x7fff. Specifically, bit [31:14] represents a start address of Set t where set is, bit [15:6] represents a specific cacheline, bit [5:2] represents an offset address of a word in the cacheline.

Based on examples 1 and 2, the structure of a cache having other cacheline sizes can be obtained.
2. Operations to be done when a length value of a cacheline is to be changed by hardware includes that:
   Step 1, all cachelines are invalidated and eliminated;
   step 2, the cache is disabled;
   step 3, the length of the cacheline is changed;
   step 4, the cache is enabled.
3. All operations required to be supported under different cacheline lengths includes invalidation (inv), clean, clean invalidation (invclean), lockdown, enabling (enable), disabling(disable) and storage (eviction), and all the operations can be performed by taking a cacheline with a current length as a basic unit:
   1). in order to support these basic operations of the cache, there write buffers having a maximum cacheline length, which respectively are a victim write buffer, a cache linefill buffer and a store buffer; and
   2). when the three write buffers do not have a configurable maximum length, only their lower address spaces are used.
   4. The storage mapping relation used by the cache is that: the cache is designed in a set-associative way.
   5. The replacement strategy used by the cache includes: pseudo random and sequential replacement.

It should be noted that the cacheline length supportable by embodiments of the disclosure should be an integer multiple of a current data bitwidth (e.g., 32 bits) of the system and should not be larger than 256 bytes. With such a cache, cachelines with different lengths can be used according to the structure of a program and different data operations so as to improve rates of program execution and data access, to improve operation efficiency, to improve rate of communication between a CPU and peripherals, and to enhance performance of a whole SoC (System on Chip).

To sum up, in the embodiment of the disclosure, a spirit of a cache having a variable cacheline length is introduced, and the cache has the following application scenarios: 1. in some audio/video file processing algorithms, for example when what desired to be accessed includes a large number of audio/video files and some special attribute values in respective segments thereof, the length of cachelines is set to a very small value; 2. during processing of network data packets, for example when what desired to be accessed includes a head and a tail of respective segments in a large number of network data packets and some special attribute values in respective segments, the length of cachelines is set to a very small value; 3. during data processing and data transmission in a USB (Universal Serial Bus), HDMI (High Definition Multimedia interface), PCI or SATA and some peripherals, a change in the length value of cachelines associated with a large amount of subsequent data transmission is determined according to attribute values of respective segments of previous data packets; 4. setting the cacheline length with a large value will improve greatly the rate and efficiency of the system during continuous transmission of a large number of high-volume audio/video files and high-volume network data packets. It can seen that a cache with such a structure has the following advantages: the length of cachelines can be determined through software or hardware, and the length of cachelines can be changed at any time to adapt to different application scenarios, thus improving access rate of system instruction(s) and data and enhancing performance of the system.

Algorithms and displays provided herein are not inherently associated with any specific computers, virtual systems and other devices. Various general-purpose systems can be used together with teachings herein. According to the above description, it is obvious to know what a structure is needed to establish such a system. Furthermore, the disclosure is not based on any specific program languages. It should be appreciated that various program languages can be used to implement the disclosure described herein, and the above description of specific program languages aims to disclose the best embodiment of the disclosure.

A large number of specific details are described in the description provided herein. However, it can be appreciated that embodiments of the disclosure can be implemented without these specific details. In some examples, well known methods, structures and techniques are not shown in detail so as not to blur understanding of the description.

Similarly, it should be appreciated that in order to simplify the disclosure and help to understand one or more of various aspects of the disclosure, some features of the disclosure may, in certain cases, be combined in a single embodiment, diagram or description thereof in the above description of illustrative embodiments of the disclosure. However, this method of the disclosure is not to be interpreted as reflecting an intention that the invention desired to be protected require more features than those expressly recited in each claim. More specifically, as the following claims reflect, the invention may have features less than all features of a single disclosed embodiment. Thus the claims following the specific embodiments are hereby incorporated into the detailed description, with each claim standing on its own as a separate embodiment.

It can be appreciated by those skilled in the art that modules in the device in an embodiment can be changed adaptively and arranged in one or more device different from the embodiment. Modules, units or assemblies in the embodiments can be combined into a module, unit or assembly, and they can also be divided into multiple sub-modules, sub-units or sub-assemblies. All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise.

Furthermore, while some embodiment described herein include some but not other features of other embodiments, combinations of features of different embodiments are meant to be within the scope of the invention and form different embodiments, as would be understood by those skilled in the art. For example, in the following claims, any one of the claimed embodiments can be combined in any combination.

It should be noted that the above-mentioned embodiments illustrate rather than limit the invention, and that those skilled in the art will be capable of designing many alternative embodiments without departing from the scope of the invention as defined by the appended claims. Any reference sings placed between parentheses shall not be construed as limiting the claim. The word "comprising" does not exclude the presence of elements or steps not listed in a claim. The word "a" or "an" preceding an element does not exclude the presence of a plurality of such elements. The invention can be implemented by means of hardware including several distinct elements and by means of a suitable programmed computer. Several of these means can be embodied by one and the same item of hardware. The use of the words first, second, third and etc. do not indicate any order. These words are to be interpreted as names.

## Claims

1. A method for adjusting a cacheline length of a cache, comprising:
if the number of times of successive failure in accessing data or instruction(s) in the cache is larger than a first predetermined threshold, then invalidating and eliminating all cachelines in the cache, disabling the cache, adjusting a length of all the cachelines to a first predetermined length value smaller than a current length value and then enabling the cache;
during data or instruction(s) access, if the number of times of linefill performed successively in the cache is larger than a second predetermined threshold and data and instruction(s) in all cachelines are accessed in sequence after each linefill, then invalidating and eliminating all the cachelines in the cache, disabling the cache, adjusting a length of all the cachelines to a second predetermined length value greater than a current length value and then enabling the cache.

2. The method according to claim 1, wherein the adjusting a length of all the cachelines to a first predetermined length value smaller than a current length value comprises:
adjusting the length of all the cachelines to the first predetermined length value smaller than the current length value automatically through hardware; or
adjusting the length of all the cachelines to the first predetermined length value smaller than the current length value through a register controlled by software.

3. The method according to claim 1, wherein the adjusting a length of all the cachelines to a second predetermined length value greater than a current length value comprises:
adjusting the length of all the cachelines to the second predetermined length value greater than the current length value automatically through hardware; or
adjusting the length of all the cachelines to the second predetermined length value greater than the current length value through a register controlled by software.

4. The method according to any one of claims 1 to 3, wherein the cache adopts a set-associative mapping relation and a replacement strategy including pseudo random and sequential replacement.

5. The method according to any one of claims 1 to 3, further comprising:
if there are three write buffers provided with a maximum cacheline length, then using the three write buffers to support basic operations of the cache, wherein the three write buffers are respectively a victim write buffer, a clean linefill buffer and a store buffer, and the basic operations comprise invalidation, clean, clean invalidation, lockdown, enabling, disabling and replacement; and
if the three write buffers are not provided with the maximum cacheline length, then using lower address spaces of the three write buffers to support basic operations of the cache, wherein the three write buffers are respectively a victim write buffer, a clean linefill buffer and a store buffer, and the basic operations comprise invalidation, clean, clean invalidation, lockdown, enabling, disabling and replacement.

6. A device for adjusting a cacheline length of a cache, comprising:
a first adjustment module configured to, if the number of times of successive failure in accessing data or instruction(s) in the cache is larger than a first predetermined threshold, invalidate and eliminate all cachelines in the cache, disable the cache, adjust a length of all the cachelines to a first predetermined length value smaller than a current length value and then enable the cache; and
a second adjustment module configured to, during data or instruction(s) access, if the number of times of linefill performed successively in the cache is larger than a second predetermined threshold and data and instruction(s) in all cachelines are accessed in sequence after each linefill, invalidate and eliminate all the cachelines in the cache, disable the cache, adjust the length of all the cachelines to a second predetermined length value greater than a current length value and then enable the cache.

7. The device according to claim 6, wherein the first adjustment module is configured to:
adjust the length of all the cachelines to the first predetermined length value smaller than the current length value automatically through hardware; or
adjust the length of all the cachelines to the first predetermined length value smaller than the current length value through a register controlled by software.

8. The device according to claim 6, wherein the second adjustment module is configured to:
adjust the length of all the cachelines to the second predetermined length value greater than the current length value automatically through hardware; or
adjust the length of all the cachelines to the second predetermined length value greater than the current length value through a register controlled by software.

9. The device according to any one of claims 6 to 8, wherein the cache adopts a set-associative mapping relation and a replacement strategy including pseudo random and sequential replacement.

10. The device according to any one of claims 6 to 8, further comprising:
a first processing module configured to, if there are three write buffers provided with a maximum cacheline length, use the three write buffers to support basic operations of the cache, wherein the three write buffers are respectively a victim write buffer, a clean linefill buffer and a store buffer, and the basic operations comprise invalidation, clean, clean invalidation, lockdown, enabling, disabling and replacement; and
a second processing module configured to, if the three write buffers are not provided with the maximum cacheline length, use lower address spaces of the three write buffers to support basic operations of the cache, wherein the three write buffers are respectively a victim write buffer, a clean linefill buffer and a store buffer, and the basic operations comprise invalidation, clean, clean invalidation, lockdown, enabling, disabling and replacement.
